# EUROPÄISCHE PATENTANMELDUNG

(11) **EP 3 434 794 A1**
(43) Veröffentlichungstag der Anmeldung: **30.01.2019**
(21) Anmeldenummer: 17183549.9
(22) Anmeldetag: 27.07.2017
(51) Int. Cl.: C21D 1/667, B23P 11/02

(54) **VERFAHREN ZUM FÜGEN UND KÜHLVORRICHTUNG**

(71) Anmelder: Sonplas GmbH, 94315 Straubing (DE)
(72) Erfinder: THALHOFER, Florian, 94369 Rain (DE); RAITH, Rudolf, 94327 Bogen (DE)
(74) Vertreter: Wunderlich & Heim Patentanwälte Partnerschaftsgesellschaft mbB

(57) **Zusammenfassung**

Die Erfindung betrifft ein Verfahren zum Fügen eines ersten Werkstücks mit einem länglichen Werkstückabschnitt in eine Öffnung eines zweiten Werkstücks, wobei das zweite Werkstück auf eine Fügetemperatur erwärmt wird und sich dabei die Öffnung erweitert, der längliche Werkstückabschnitt passend in die erweiterte Öffnung eingesetzt wird und zum Bilden eines Gesamtwerkstücks zumindest das zweite Werkstück abgekühlt und in eine Presspassung zwischen dem eingesetzten länglichen Werkstückabschnitt gebildet wird. Das Gesamtwerkstück wird nach dem Fügen mit einer Kühlluft beströmt, in der eine Kühlflüssigkeit eingesprüht ist. Weiterhin betrifft die vorliegende Erfindung eine Kühlvorrichtung zum Kühlen eines Gesamtwerkstücks, welches durch Fügen eines ersten Werkstücks mit einem länglichen Werkstückabschnitt in eine Öffnung eines zweiten Werkstücks gebildet ist, wobei zumindest das zweite Werkstück erwärmt ist, das mit einer Strömungseinrichtung, durch welche eine Strömung von Kühlluft erzeugbar ist, wobei das Gesamtwerkstück von der Kühlluft umströmbar ist.

## Beschreibung

Die Erfindung betrifft ein Verfahren zum Fügen gemäß dem Oberbegriff des Anspruchs 1 sowie eine Kühlvorrichtung zum Kühlen eines Gesamtwerkstücks gemäß dem Oberbegriff des Anspruchs 9.

Bei einem solchen Verfahren wird ein erstes Werkstück mit einem länglichen Werkstückabschnitt in eine Öffnung eines zweiten Werkstücks gefügt, wobei das zweite Werkstück auf eine Fügetemperatur erwärmt wird und sich dabei die Öffnung erweitert, der längliche Werkstückabschnitt passend in die erweiterte Öffnung eingesetzt und zum Bilden eines Gesamtwerkstücks zumindest das zweite Werkstück abgekühlt und eine Presspassung zwischen dem eingesetzten länglichen Werkstückabschnitt und der Öffnung gebildet.

Eine entsprechend Kühlvorrichtung zum Kühlen eines Gesamtwerkstücks, welches durch Fügen eines ersten Werkstücks mit einem länglichen Werkstückabschnitt in eine Öffnung eines zweiten Werkstücks gebildet ist, wobei zumindest das zweite Werkstück erwärmt ist, weist eine Strömungseinrichtung auf, durch welche eine Strömung mit Kühlluft erzeugbar ist, wobei das Gesamtwerkstück von der Kühlluft umströmbar ist.

In der Fügetechnik besteht das andauernde Bedürfnis, Einzelteile eines komplexeren Werkstücks besonders passgenau zueinander anzuordnen. Hierbei wird vorzugsweise ein Verfahren angewendet, welches die Behandlung mittels Wärme aufweist. Durch das Erwärmen von mindestens einem zweiten oder mehrerer zu fügender Bauteile wird insbesondere eine Aufweitung des jeweiligen erwärmten Bauteils erreicht, wodurch das Eintreiben eines weiteren Werkstücks in eine Fügeverbindung mit verringertem Kraftaufwand und besonders passgenau erreicht werden kann.

Durch das anschließende Abkühlen des mindestens einen erwärmten Werkstücks kann ein besonders formschlüssiges Verbinden, insbesondere mit Reibungsschluss zwischen den mindestens zwei Bauteilen erreicht werden.

Insbesondere hinsichtlich der Wirtschaftlichkeit eines solchen Verfahrens ist es entscheidend, dass der Fügeprozess möglichst zeiteffizient durchgeführt wird. Hierzu zählt das Erwärmen des mindestens einen Werkstücks, die Geschwindigkeit des Fügevorgangs wie auch des abschließenden Abkühlens des gefügten Gesamtwerkstücks. Bei einem zu schnellen Abkühlen, etwa bei einem Abschrecken mit Wasser, kann jedoch ein unerwünschter Verzug auftreten.

Die vorliegende Erfindung stellt sich die **Aufgabe**, ein Verfahren sowie eine Vorrichtung anzugeben, mit welcher der Fügeprozess mindestens zweier Werkstücke zu einem Gesamtwerkstück in besonders wirtschaftlicher Weise bereitgestellt wird.

Erfindungsgemäß wird die Aufgabe durch ein Verfahren gemäß dem Anspruch 1 sowie mittels einer Vorrichtung gemäß dem Anspruch 9 bereitgestellt.

Bevorzugte Ausführungsformen der vorliegenden Erfindung sind in den abhängigen Ansprüchen angegeben.

Das erfindungsgemäße Verfahren ist dadurch gekennzeichnet, dass das Gesamtwerkstück nach dem Fügen mit einer Kühlluft beströmt wird, in welcher eine Kühlflüssigkeit eingesprüht ist.

Ein erster Grundgedanke der Erfindung besteht darin, eine Herabsetzung der Temperatur eines erhitzten Werkstücks oder Gesamtwerkstücks dadurch zu beschleunigen, dass die Verdampfungsenthalpie und/oder Wärmeleitfähigkeit einer Kühlflüssigkeit beim Abkühlen dahingehend ausgenutzt wird, dass diese einer Kühlluft beigemengt wird. Diese angereicherte Kühlluft durchströmt und/oder umströmt hierbei das zu kühlende Gesamtwerkstück, also das Werkstück, wobei gegenüber einer ausschließlichen Gaskühlung eine erhöhte Abkühlgeschwindigkeit erreicht wird.

Im Gegensatz zu einem Kühlen ausschließlich mit Kühlflüssigkeit kann die Abkühlung besonders schonend und genau gesteuert erfolgen, wodurch einem Verziehen sowie dem Auftreten von Spannungen in dem Gesamtwerkstück vorgebeugt wird.

Eine bevorzugte Ausführungsform der Erfindung besteht darin, dass ein Außenumfang des Gesamtwerkstücks von der Kühlluft mit der eingesprühten Kühlflüssigkeit umströmt wird. Durch ein Umströmen des abzukühlenden Gesamtwerkstücks oder zumindest des erhitzten zweiten Werkstücks kann eine besonders effiziente Ableitung der Wärme erreicht werden. Durch das Umströmen kann aufgeheizte Kühlluft mit Kühlflüssigkeit von dem (Gesamt-)Werkstück besonders effektiv abgeleitet werden und neue Kühlluft mit Kühlflüssigkeit dem abzukühlenden Werkstück zugeführt werden. Flüssige eingesprühte Kühlflüssigkeit, welche dem abzukühlenden Werkstück zugeführt wird, kann in Abhängigkeit von der Temperatur des Werkstücks, verdampfen und somit zusätzliche Verdampfungsenergie aufnehmen. Die erhitzte Kühlflüssigkeit beziehungsweise das erhitzte "Kühlflüssigkeits"-Gas kann durch das Umströmen des Gesamtwerkstücks von diesem zuverlässig abgeführt werden, wodurch zumindest ein Teil der thermischen Energie des Werkstücks mit abgeführt wird. Die gegenüber einer reinen Kühlluft erhöhte Dichte, Wärmeenthalpie, Wärmeleitfähigkeit und Verdampfungsenthalpie der eingesprühten, zerstäubten Kühlflüssigkeit kann eine besonders wirksame Kühlung des Werkstücks bereitstellen.

Besonders bevorzug ist es nach einer Weiterbildung der vorliegenden Erfindung, dass zumindest in dem zweiten Werkstück mindestens ein Durchgangskanal vorgesehen ist, wobei die Kühlluft durch den mindestens einen Durchgangskanal hindurchgeleitet wird. Besonders effizient wird die Wärmeenergie des zumindest zweiten Werkstücks dadurch abgeleitet, dass dieses von Kühlluft nicht nur an einem Außenumfang umströmt wird, sondern alternativ oder zusätzlich auch durch in dem Werkstück liegende Kanäle, also Durchgangskanäle, strömt. Hierdurch kann eine besonders große Oberfläche des Gesamtwerkstücks für einen Wärmeübergang von dem Gesamtwerkstück zu einem Kühlmedium, insbesondere der Kühlluft mit eingesprühter Kühlflüssigkeit, bereitgestellt werden.

Nach einer besonders zweckmäßigen Weiterbildung der Erfindung ist es vorgesehen, dass das Werkstück von einer oder mehreren Seiten von der Kühlluft beströmt wird. Grundsätzlich kann eine lineare Kühlluftströmung vorgesehen werden, bei welcher das Werkstück zwischen einem Einlassbereich für ein Kühlmedium, also Kühlluft und Kühlflüssigkeit und einem Auslassbereich für erhitztes, also verbrauchtes Kühlmedium vorgesehen sein kann. Die Kühlflüssigkeit kann insbesondere im Bereich der Kühlluftzufuhr eingeleitet, insbesondere eingesprüht werden und sich mit dieser in einem ersten Bereich, insbesondere einem Mischbereich, in Strömungsrichtung vor dem Werkstück vermischen. Hierdurch kann eine besonders feine Verteilung der Kühlflüssigkeit in der Kühlluft erreicht werden. Alternativ kann das Werkstück auch von mehreren Seiten mit Kühlluftmedium beströmt werden, wobei sich die Kühlluftströmungen beispielsweise kreuzen oder parallel zueinander geführt werden, wobei zwar ein Vermischen der Strömungen zumindest in einem Grenzbereich der Strömungen ermöglicht sein kann, aber im Übrigen die Strömungen unterschiedliche Bereiche des Werkstücks kühlen können oder mindestens zwei Zuluftbereiche für Kühlluft vorgesehen sind, die vor, am oder nach dem Werkstück konvergieren und über eine gemeinsame Abluft abgeführt werden und über einen oder mehrere separate Auslassöffnungen abgeführt werden. Besonders bevorzugt werden einzelne Strömungen von Kühlluft alternierend vorgesehen. Hierbei können Einlassöffnung(en) und Auslassöffnung(en) alternierend in ihrer Funktion, Kühlluft ein- beziehungsweise auszulassen, wechseln. Somit können mittels derselben Einrichtungen für Kühlluft (Ein- und Auslassöffnungen) unterschiedliche, vorzugsweise gegenläufig ausgerichtete Strömungen von Kühlluft bereitgestellt werden. Besonders bevorzugt sind die Einlassöffnungen so ausgebildet, dass durch sie wahlweise Kühlluft in die Kühlvorrichtung einströmen kann oder aber die Einlassöffnungen als Auslassöffnungen dienen können, wenn Kühlluft über mindestens eine andere Einlassöffnung in die Kühlvorrichtung zugeführt wird. Im Bereich einer Auslassöffnung kann ebenfalls eine Vorrichtung zum Einsprühen von Kühlflüssigkeit vorgesehen sein, welche bevorzugt dann verwendet wird, wenn die Auslassöffnung als Einlassöffnung verwendet wird. Vorzugsweise sind die einzelnen Einrichtungen zum Zuführen von Kühlflüssigkeit in der Vorrichtung gleichartig ausgebildet. Im Bereich einer Auslassöffnung kann ebenfalls ein Mischbereich für Kühlflüssigkeit und Kühlluft vorgesehen sein, welcher insbesondere dann zu tragen kommt, wenn die Auslassöffnung als Einlassöffnung fungiert. Die Mischbereiche in der Kühlvorrichtung können insgesamt gleichartig ausgebildet sein. In all diesen Varianten wird die Kühlflüssigkeit vorzugsweise mit der Kühlluft in den einzelnen Bereichen zwischen Kühlluftzuführöffnung und (Gesamt-)Werkstück durchmischt. Alternativ kann die Kühlflüssigkeit mit oder ohne Kühlluft auch in einzelnen Bereichen entlang der Kühlvorrichtung bedarfsgerecht zu dosiert werden.

So kann beispielsweise in einem ersten Bereich zwischen der Zufuhr von Kühlluft und dem Werkstück eine größere Menge an Kühlflüssigkeit zugeführt werden, wobei in einem zweiten Bereich, beispielsweise zwischen einer zweiten Kühlluftöffnung und dem Werkstück, bedarfsgerecht eine vorzugsweise verminderte Menge an Kühlflüssigkeit bereitgestellt wird.

Besonders zweckmäßig ist es nach einer Weiterbildung der Erfindung, dass das Gesamtwerkstück nach dem Fügen in einer Kühlvorrichtung eingesetzt wird, welche mindestens eine Einlass- und mindestens eine Auslassöffnung für die Kühlluft aufweist. Die vorangehend beschriebenen einzelnen oder mehreren Öffnungen, welche als Einlass- und/oder Auslassöffnungen einsetzbar sind, können in einer Kühlvorrichtung zur Kühlung des Gesamtwerkstücks vorgesehen sein. Hierbei wird das Werkstück in vorteilhafter Weise zwischen der mindestens einen Einlassöffnung und der mindestens einen Auslassöffnung so angeordnet, dass das Werkstück gleichmäßig von dem Kühlmedium, also der Kühlluft mit der Kühlflüssigkeit umströmt wird. Vorzugsweise liegen diese auf gegenüberliegenden Seiten des Werkstücks in der Kühlvorrichtung. Über die mindestens eine Auslassöffnung wird das Kühlmedium mit der aufgenommenen Energie des abzukühlenden Werkstücks abgeführt.

Besonders bevorzugt ist es nach der Erfindung, dass die Kühlvorrichtung ein Gehäuse aufweist, welches einen Kühlraum umschließt, in welchen das Gesamtwerkstück unter Verbleib eines umlaufenden Freiraums eingesetzt wird, und dass die Kühlluft durch den umlaufenden Freiraum strömt, und so der Außenumfang des Gesamtwerkstücks umströmt wird. Durch das Ausbilden eines umlaufenden Freiraums zwischen der Innenseite des Gehäuses der Kühlvorrichtung und dem zu kühlenden Werkstück kann in besonders zweckmäßiger Weise ein gerichtetes Strömen von Kühlmedium zwischen der mindestens einen Einlass- und mindestens einen Auslassöffnung eingestellt werden. Das Einstellen eines gleichmäßigen Abkühlvorgangs des Gesamtwerkstücks kann einem Verziehen des Werkstücks und/oder Spannungen, insbesondere im Fügebereich der einzelnen Werkstücke (beispielsweise erstes und zweites Werkstück) zum Gesamtwerkstück, also dem Werkstück, entgegenwirken. Dabei kann die Abkühlgeschwindigkeit, mit welcher das Gesamtwerkstück an Wärmeenergie verliert, dadurch eingestellt werden, dass die Strömungsgeschwindigkeit und/oder ein Kühlflüssigkeitsanteil in der Kühlluft angepasst wird. Hierbei können eine erhöhte Strömungsgeschwindigkeit des Kühlmediums und/oder ein erhöhter Anteil an Kühlflüssigkeit die Abkühlgeschwindigkeit erhöhen.

Eine definierte Strömung von Kühlmedium lässt sich vorzugsweise dadurch erreichen, dass die Strömung in der Kühlvorrichtung mittels Druckluft und/oder einer Vakuumpumpe erzeugt wird. Die Strömung kann also durch einen Überdruck, einen Unterdruck oder durch Kombination von Überdruck und Unterdruck, vorzugsweise an unterschiedlichen Seiten oder Bereichen in der Kühlvorrichtung, erzeugt werden. Der Überdruck wird vorzugsweise im Bereich mindestens einer Einlassöffnung der Kühlluft vorgesehen, insbesondere indem Kühlluft als Druckluft in die Kühlvorrichtung eingeblasen wird. Der Unterdruck kann insbesondere im Bereich einer Auslassöffnung vorzugsweise mittels einer Vakuumpumpe vorgesehen werden, welche das erhitzte Kühlmedium aus der Kühlvorrichtung saugt.

Für eine besonders effektive Kühlung ist es nach einer Weiterbildung der Erfindung vorgesehen, dass die Kühlluft unmittelbar vor Auftreffen auf das Gesamtwerkstück mit der Kühlflüssigkeit beaufschlagt wird. Hierdurch kann eine besonders feine Zerstäubung der Kühlflüssigkeit erreicht werden. Ein hoher Zerstäubungsgrad der Kühlflüssigkeit kann eine hohe Flüssigkeitsoberfläche begünstigen, wodurch ein besonders effektiver Wärmeübergang von dem Gesamtwerkstück zu dem Kühlmedium, insbesondere den Kühlflüssigkeitsanteil, erzeugt wird.

Für eine besonders effiziente Trocknung des abgekühlten Werkstücks kann Druckluft ohne Wassernebel beziehungsweise Kühlflüssigkeit in die Kühlvorrichtung eingeleitet werden. Vorzugsweise ist hierbei ein Druck in der Kühlvorrichtung geringer als ein atmosphärischer Druck, wodurch Feuchtigkeit leichter in die Gasphase übergehen kann. Somit ist ein Abtransport von Feuchtigkeit aus der Kühlvorrichtung und damit von dem Werkstück in einfacher Weise ermöglicht. Besonders bevorzugt wird in der Kühlvorrichtung zumindest ein partielles Vakuum (Druck < 1 Bar), vorzugsweise ein hohes Vakuum (Druck <0,01 Bar) erzeugt, in welches periodisch Trocknungsluft, vorzugsweise Druckluft, eingeleitet und ausgeleitet wird. Vakuum und Luftzufuhr können hierbei beispielsweise über die Ein- und Auslassöffnungen, also insbesondere Einlassöffnungen die als Auslassöffnungen fungieren können, an der Kühlvorrichtung bereitgestellt sein. Besonders bevorzugt werden Vakuum und Luftzufuhr mittels gegenüberliegender Einlassöffnungen bereitgestellt. Zum Einstellen eines Vakuums in der Kühlvorrichtung kann eine Vakuumpumpe oder ein anderes geeignetes Mittel zum Erzeugen eines Vakuums oder Unterdrucks vorgesehen sein, welches mit zumindest einer Einlassöffnung verbunden ist.

Die erfindungsgemäße Vorrichtung ist dadurch gekennzeichnet, dass eine Sprüheinrichtung vorgesehen ist, mit welcher eine Kühlflüssigkeit in die Kühlluft sprühbar ist.

Nach einem weiteren Grundgedanken der vorliegenden Erfindung wird durch eine Kühlvorrichtung, in welcher sich ein abzukühlendes Gesamtwerkstück befindet, ein Kühlmedium eingeströmt, welches zumindest ein Kühlgas, insbesondere Kühlluft und eine Kühlflüssigkeit aufweist. Das Kühlmedium wird vorzugsweise unmittelbar vor dem zu kühlenden Gesamtwerkstück durch Mischen seiner Bestandteile erzeugt und durch eine gerichtete Strömung vorzugsweise kontinuierlich dem Gesamtwerkstück zugeführt. Das Kühlmedium wird vorzugsweise seinen Bestandteilen nach einzeln der Kühlvorrichtung zugeführt. Die Vorrichtung ist mit zumindest einer Auslassöffnung ausgebildet, über welche verbrauchtes, erwärmtes Kühlmedium ausleitbar ist.

Das erwärmte Kühlmedium kann mit zumindest einem Teil der Wärmeenergie des Gesamtwerkstücks aus der Kühlvorrichtung ausleitbar sein. Mittels der Sprüheinrichtung kann eine besonders fein verteilte Kühlflüssigkeit in der Kühlluft bereitgestellt werden, wodurch das Kühlmedium ein besonders effizientes Kühlen des Gesamtwerkstücks ermöglicht.

Besonders zweckmäßig ist es nach einer Weiterbildung der Erfindung, dass die Kühlvorrichtung ein Gehäuse mit mindestens einer Einlassöffnung und mindestens einer Auslassöffnung für die Kühlluft aufweist. Durch kontrolliertes Zuführen und Abführen von Kühlluft durch Einlass- und Auslassöffnungen kann eine definierte Strömung des Kühlmediums, also mindestens der Kühlluft mit der Kühlflüssigkeit eingestellt werden. Dies kann einen kontrollierten Abkühlvorgang bereitstellen.

Besonders zweckmäßig ist es nach einer Weiterbildung der Erfindung, dass das Gehäuse einen Kühlraum umschließt, in welchen das Gesamtwerkstück unter Verbleib eines umlaufenden Freiraums einsetzbar ist, wobei die Kühlluft durch den umlaufenden Freiraum zum Umströmen des Gesamtwerkstücks strömbar ist. Durch den umlaufenden Freiraum zwischen Gehäuse und zu kühlendem Gesamtwerkstück kann ein Kühlkanal gebildet sein, welcher zu einer gerichteten Strömung des Kühlmediums um das zu kühlende Gesamtwerkstück beitragen kann. Aufgrund der umlaufenden Ausbildung des Freiraums kann das Kühlmedium gleichmäßig der Oberfläche des Gesamtwerkstücks zugestellt werden.

Besonders zweckmäßig ist es nach einer Weiterbildung der Erfindung, dass mit einer Auslassöffnung als Strömungseinrichtung eine Vakuumpumpe verbunden ist.. Durch das Erzeugen eines Unterdrucks, insbesondere im Auslassbereich, ist das Kühlmedium besonders effizient aus der Kühlvorrichtung abführbar, wodurch die Strömung von Kühlmedium innerhalb der Kühlvorrichtung einstellbar sein kann.

Vorzugsweise ist in dem Freiraum zwischen Gehäuse und Gesamtwerkstück entlang einer äußeren Längsseite des Gesamtwerkstücks ein perforiertes Element angeordnet, durch welches das Kühlmedium aus dem Freiraum zu dem Gesamtwerkstück gerichtet, vorzugsweise orthogonal zur Oberfläche des Gesamtwerkstückes, zugeleitet werden kann.

Besonders bevorzugt ist jeweils ein weiterer Freiraum zwischen Gehäuse und Gesamtwerkstück sowohl in Strömungsrichtung des Kühlmediums vor beziehungsweise hinter dem Gesamtwerkstück gebildet, durch welchen das Kühlmedium den seitlichen Freiraum zwischen Gehäuse und Außenumfang des Gesamtwerkstücks zuleitbar beziehungsweise ableitbar ist.

Zumindest in einem Bereich des seitlichen Freiraums zwischen Gehäuse und äußerem Umfang des Gesamtwerkstücks kann eine orthogonale Strömung in etwa senkrecht zum Außenumfang des Gesamtwerkstücks bereitgestellt werden.

Hierfür kann in dem Freiraum ein Element vorgesehen werden, welches eine ansonsten laterale Strömung im dem Freiraum zu einer orthogonalen Strömung umleitet. Vorzugsweise wird zum Bereitstellen der orthogonale Strömung ein perforiertes oder ansonsten mit Öffnungen versehenes Element vorgesehen, wobei die Öffnungen eine Strömung von Kühlmedium in etwa senkrecht zur Oberfläche des Gesamtwerkstücks bewirken.

Vorzugsweise teilt das Element den Freiraum entlang der Längsachse des Werkstücks, vorzugsweise im Bereich des Außenumfangs, in zwei Bereiche, einen ersten äußeren Bereich zwischen Gehäuse und Element und einen zweiten inneren Bereich zwischen Element und Gesamtwerkstück. Das Kühlmedium kann aus dem ersten Bereich durch die Perforationen und/oder Öffnungen in den zweiten Bereich durch gerichtetes Strömen gelangen, wobei eine laterale Strömung des Kühlmediums entlang des Bereichs parallel zum Außenumfang für einen Durchtritt durch die Öffnungen in eine zumindest zeitweise orthogonale Strömung umgelenkt werden kann.

In der Zeichnung wird nachfolgend die Erfindung weiter erläutert. In den Figuren zeigen:
- Fig. 1: eine Querschnittsansicht der erfindungsgemäßen Kühlvorrichtung entlang einer Längsachse des länglichen Werkstückabschnitts des ersten Werkstücks.
- Fig. 2: eine Querschnittsansicht der erfindungsgemäßen Kühlvorrichtung entlang einer Längsachse des länglichen Werkstückabschnitts des ersten Werkstücks mit angedeuteter Strömungsrichtung des Kühlmediums;
- Fig. 3: eine Querschnittsansicht der erfindungsgemäßen Kühlvorrichtung entlang einer Längsachse des länglichen Werkstückabschnitts des ersten Werkstücks mit angedeuteter Strömungsrichtung des Kühlmediums und skizziertem Einsprühen der Kühlflüssigkeit;
- Fig. 4: eine vergrößerte Querschnittansicht der erfindungsgemäßen Kühlvorrichtung entlang einer Längsachse des länglichen Werkstückabschnitts des ersten Werkstücks mit perforiertem Element im Freiraum zwischen Gehäuse und Gesamtwerkstück und angedeuteter Strömungsrichtung des Kühlmediums.

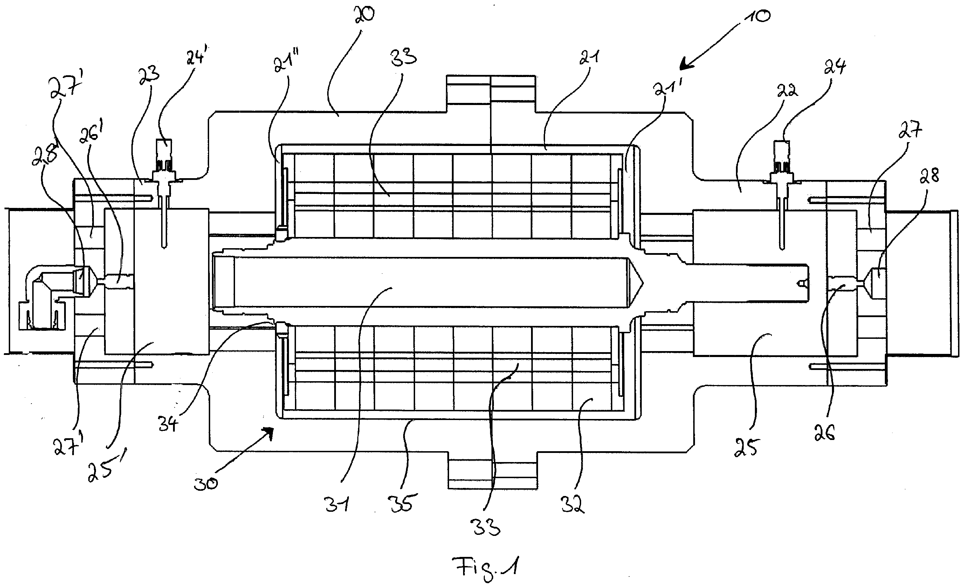

In Figur 1 ist eine erfindungsgemäße Kühlvorrichtung 10 dargestellt. Diese weist ein Gehäuse 20 auf, welches das zu kühlende Gesamtwerkstück 30 zumindest an einem Außenumfang 35 umgibt. Vorzugsweise umschließt das Gehäuse 20 das Gesamtwerkstück 30 vollständig. Die Kühlvorrichtung 10 weist einen ersten Einlassbereich 22 und einen zweiten Einlassbereich 23 auf. Diese können gegenüber einem mittleren Bereich des Gehäuses 20, welcher zwischen dem ersten Einlassbereich 22 und dem zweiten Einlassbereich 23 angeordnet ist, einen verjüngten Gehäuse-Durchmesser aufweisen.

In den Einlassbereichen 22, 23 ist jeweils eine Mischkammer 25, 25' vorgesehen, in welche zum einen Kühlflüssigkeit (Wassernebel/Sprühwasser) über Düsen 26, 26' aus einem Wassereinlass 28, 28' insbesondere als Sprühnebel einleitbar ist. An den Mischkammern 25, 25' sind Einlassöffnungen 27, 27' vorgesehen, über welche ein Gas, vorzugsweise Druckluft in das Innere der jeweiligen Mischkammern 25, 25' eingeblasen werden kann. Innerhalb der Mischkammern 25, 25' kann sich die eingeleitete Kühlflüssigkeit mit der eingeleiteten Druckluft auf der jeweiligen Seite vermischen und dem innerhalb des Gehäuses 20 angeordneten Gesamtwerkstück 30 als Kühlmedium zugeleitet werden.

Unabhängig von der Ausführungsform kann nach einer Weiterbildung der Erfindung das Zuführen von Kühlflüssigkeit und Druckluft insbesondere wechselseitig erfolgen. Beispielsweise wird das Kühlmedium, insbesondere der Wassernebel und die Druckluft, dabei über die Düse 26 und die Einlassöffnung 27 im ersten Einlassbereich 22 in die Mischkammer 25 geleitet, wobei die mindestens eine Einlassöffnung 27' als Auslassöffnung dient, durch welche das Kühlmedium, nachdem es das zu kühlende Werkstück um- beziehungsweise durchströmt hat, aus der Kühlvorrichtung austreten kann. Während einer solchen Durchleitung von Kühlmedium aus dem ersten Einlassbereich 22 durch die Kühlvorrichtung wird vorzugsweise die Zufuhr von Kühlflüssigkeit durch die Düse 26' in die Vorrichtung unterbrochen. Wird hingegen Kühlflüssigkeit und Druckluft über die Düse 26' und die Einlassöffnung 27' im zweiten Einlassbereich 23 in die Mischkammer 25' geleitet, kann die Einlassöffnung 27 im ersten Einlassbereich 22 als Auslassöffnung für Kühlmedium dienen. Hierbei kann wiederum die Zufuhr von Kühlflüssigkeit durch die Düse 26 in die Vorrichtung unterbrochen sein. Durch die jeweiligen Einlassöffnungen 27, 27', die jeweils als Auslassöffnungen fungieren können, kann für die Dauer der Funktion als Auslassöffnung eine Zufuhr von Druckluft in die Kühlvorrichtung 10 unterbrochen sein, wodurch das Ausleiten von Kühlmedium ermöglicht sein kann. Während einer solchen entgegengesetzten Durchleitung von Kühlmedium aus dem zweiten Einlassbereich 23 durch die Kühlvorrichtung wird vorzugsweise die Zufuhr von Wassernebel durch die Düse 26 in die Kühlvorrichtung unterbrochen. Vorzugsweise werden die voranstehend beschriebenen Betriebsmodi alterierend durchgeführt, wodurch eine besonders gleichmäßige, Abkühlung des Werkstücks mit wechselseitigem Durchströmen der Kühlvorrichtung mit Kühlmedium erfolgen kann.

Zwischen dem Gehäuse 20 und dem Gesamtwerkstück 30 ist ein Freiraum 21 gebildet, welcher vorzugsweise umlaufend zwischen Gesamtwerkstück 30 und Gehäuse 20 vorgesehen ist. Das Gesamtwerkstück 30 ist zumindest aus einem ersten Werkstück 31 und einem zweiten Werkstück 32 gebildet, welches zumindest einen länglichen Werkstückabschnitt des ersten Werkstücks 31 radial umgeben kann. Über eine Öffnung 34 in dem zweiten Werkstück 32 kann das erste Werkstück 31 in das zweite Werkstück 32 unter Erhitzung von zumindest dem zweiten Werkstück 32 gefügt sein.

Das Kühlmedium, insbesondere die Mischung von zugeführter Druckluft und der eingesprühten Kühlflüssigkeit, wird beispielsweise von der Mischkammer 25 in dem Einlassbereich 22 um den Außenumfang 35 des Gesamtwerkstücks 30 entlang des Freiraums 21 dem Einlassbereich 23 zugeführt, welcher hier als Auslassbereich dienen kann. Die Kühlluft kann dabei durch die Einlassöffnung 27 in den Einlassbereich 22 gelangen. Im Auslassbereich 23 kann zumindest eine Einlassöffnung 27' vorgesehen sein, welche als Auslassöffnung dient und über welche das verbrauchte Kühlmedium abgeführt werden kann. Das Kühlmedium ist insofern verbraucht, als dass es Wärmeenergie von dem Gesamtwerkstück 30 beim Um-/Durchströmen aufgenommen hat und diese beim Ableiten des Kühlmediums aus der Kühlvorrichtung 10 abführt. Hierbei kann der Kühlflüssigkeitsnebel in der Kühlluft in Abhängigkeit von der Temperatur des zu kühlenden Gesamtwerkstücks 30 in die Gasphase übergehen und als Gas mit der Kühlluft über den Auslassbereich aus der Auslassöffnung 27' abgleitet werden.

Für eine besonders effiziente Kühlung können in dem Inneren des Gesamtwerkstücks 30, insbesondere des zweiten Werkstücks, Kühlungskanäle 33 vorgesehen sein, durch welche das Kühlmedium, also insbesondere die Mischung von Sprühflüssigkeit und Kühlluft, das Werkstück durchströmen kann. In dem Einlassbereichen 22 und 23 der Kühlvorrichtung 10 können Sensoren 24 und 24' angeordnet sein, welche die Temperatur des Kühlmediums lokal erfassen. Vorzugsweise sind die Sensoren 24 und 24' in Strömungsrichtung des Kühlmediums vor und hinter dem Gesamtwerkstück angeordnet. Mittels der erfassten Temperaturdifferenz zwischen dem ersten Sensor 24 und dem zweiten Sensor 24' sowie der definierten Menge an zugeführter Kühlflüssigkeit und Kühlluft, insbesondere einer Zusammensetzung des Kühlmediums, und eines Volumenstroms, lässt sich die von dem Gesamtwerkstück 30 abgeführte Wärmemenge ermitteln. Hierdurch kann der Abkühlprozess des Gesamtwerkstücks 30 ermittelt werden, ohne direkt eine Messung der Temperatur des Gesamtwerkstücks 30 vornehmen zu müssen.

Die jeweilige als Auslassöffnung eingesetzte Einlassöffnung 27, 27', kann mit einer oder mehreren Vakuumpumpen zum Bilden eines Unterdrucks im Bereich der Öffnungen 27, 27' verbunden sein, wodurch das Kühlmediums durch das Innere des Gehäuses 20 besonders effizient geleitet und abgeführt werden kann.

Vor beziehungsweise hinter dem Gesamtwerkstück 30 können seitliche Freiräume 21' und 21" angeordnet sein, durch welche das Kühlmedium dem Freiraum 21 zuleitbar beziehungsweise ausleitbar ist.

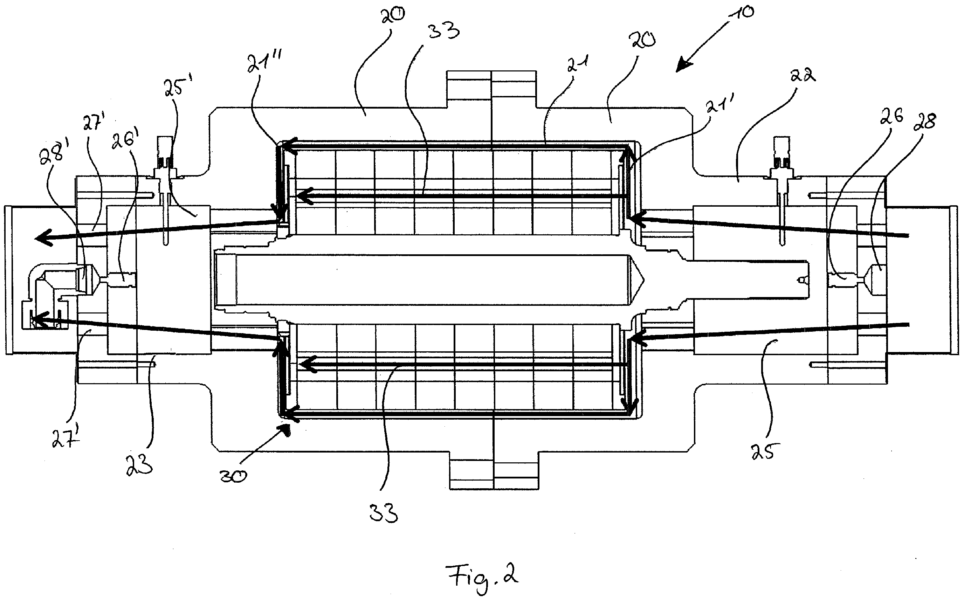

Aus Fig. 2 geht die erfindungsgemäße Kühlvorrichtung 10 hervor, wie sie bereits in Fig. 1 dargestellt ist. Durch die eingezeichneten Pfeile wird eine Strömungsrichtung des Kühlmediums, insbesondere eine Strömungsrichtung der Kühlluft um und durch das zu kühlende Gesamtwerkstück 30 angedeutet. Diese kann in voranstehend beschriebener Weise auch in entgegengesetzter Richtung, vorzugsweise alternierend, vorgesehen sein. Die Pfeile beginnen im Einlassbereich 22, gehen durch die Mischkammer 25 entlang zumindest des Freiraums 21 und stellen ebenfalls ein fakultatives Durchströmen des Gesamtwerkstücks 30 durch die Kühlungskanäle 33 dar. Gefolgt vom Gesamtwerkstück 30 durchströmt das kühlmedium weiter den Einlassbereich 23 und verlässt die Kühlvorrichtung durch die Einlassöffnung 27', welche hier als Auslassöffnung dient,

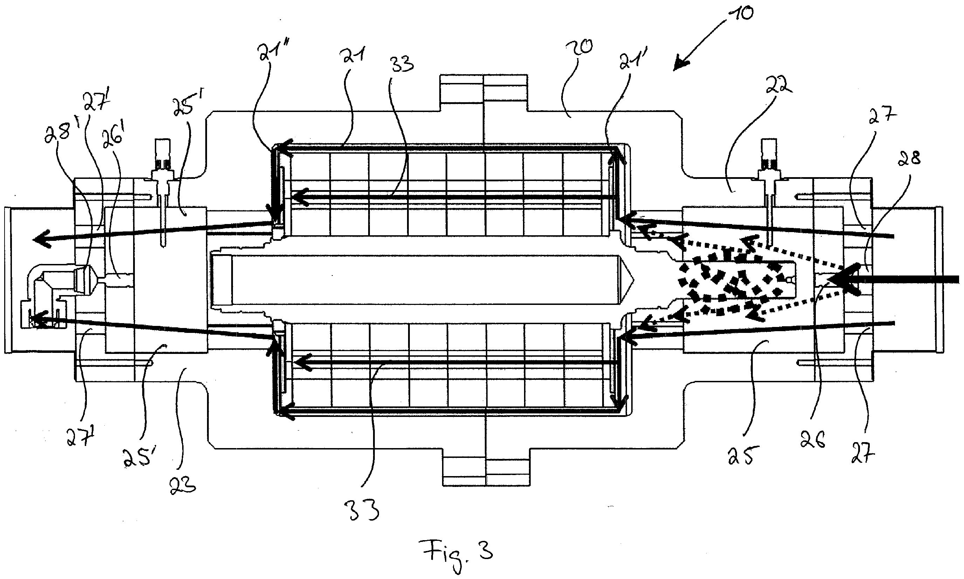

Fig. 3 zeigt dieselbe Querschnittsansicht der erfindungsgemäßen Kühlvorrichtung 10 wie Fig. 1 und 2, jedoch im Vergleich zu Fig. 2 zusätzlich mit einer in der Mischkammer 25 angedeuteten Vermengung von Kühlluft in Form von Pfeilen mit durchgezogenen Linien und Kühlflüssigkeit angedeutet durch Pfeile mit gestrichelten Linien, wodurch eine Durchmischung der beiden Medien zu dem Kühlmedium erfolgt. Die Durchmischung ist durch die wirbelartig dargestellten schwarzen Vierecke, insbesondere in der Mischkammer 25 dargestellt.

Insbesondere durch die wirbelartige Durchmischung von Kühlluft und Kühlflüssigkeit kann eine besonders gleichmäßig Verteilung der beiden Phasen, nämlich der flüssigen Kühlflüssigkeitsphase und der gasförmigen Kühlluftphase in dem Kühlmedium bereitgestellt werden. Zusätzlich kann die einströmende Kühlluft die eingesprühte Kühlflüssigkeit noch feiner zerstäuben, wodurch eine besonders große Flüssigkeitsoberfläche bereitgestellt ist.

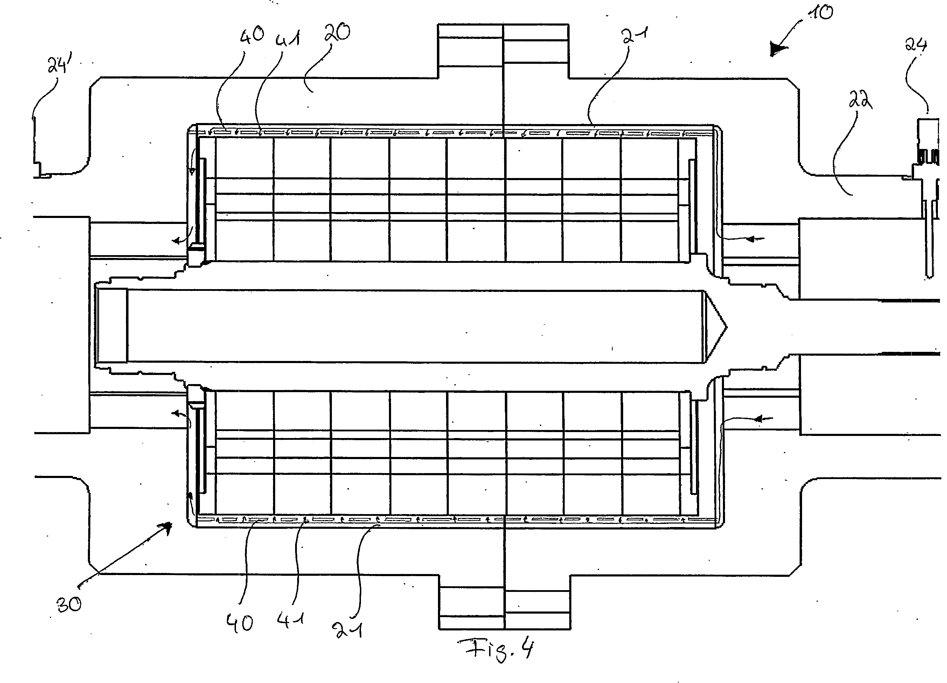

Fig. 4 zeigt eine vergrößerte Darstellung der erfindungsgemäßen Kühlvorrichtung 10 insbesondere den Bereich zwischen den beiden Sensoren 24 und 24'. In dem Freiraum 21 zwischen dem Gehäuse 20 und dem zu kühlenden Gesamtwerkstück 30 kann gemäß der Ausführungsform nach Fig. 4 ein perforiertes beziehungsweise mit Öffnungen versehenes Element 40 vorgesehen sein, durch welches das Kühlmedium aus dem Freiraum gezielt Bereichen eines äußeren Umfangs des Gesamtwerkstücks orthogonal, also in etwa senkrecht zu einer Längsachse des Gesamtwerkstücks, zuleitbar ist. Das perforierte Element ist in dem Freiraum 21 so angeordnet, dass das Kühlmedium aus dem Einlassbereich 22 von außen nach innen durch die Perforation/Öffnung 41 zu dem zu kühlenden Gesamtwerkstück 30 gelangen kann. Nach einem Durchtritt durch die Perforierungen/Öffnungen 41 ist auf einer Seite, welche dem Einlassbereich 23 zugeordnet ist (dieser fungiert hier als Auslassbereich), ein lateraler Freiraum 21" zwischen dem Gesamtwerkstück 30 und dem Gehäuse 20 gebildet, durch welchen das Kühlmedium insbesondere nach Zuleitung zu dem Gesamtwerkstück 30 abgeleitet werden kann.

Durch Vorsehen des perforierten Elements 40 in dem Freiraum 21 kann die ansonsten parallel geführte laterale Strömung von Kühlmedium entlang der Oberfläche des Gesamtwerkstücks 30, insbesondere im Bereich der Perforationen/Öffnungen 41, umgeleitet werden. Mittels des perforierten Elements 40 kann daher eine zu der Oberfläche des Gesamtwerkstücks 30 zumindest teilweise orthogonale Strömung von Kühlmedium erzeugt werden. Diese kann im Vergleich zu einer lediglich lateralen/laminaren Strömung entlang der Oberfläche des zu kühlenden Gesamtwerkstücks zu einer besonders effektiven Kühlung beitragen. Das Element 41 ist so ausgebildet, das das in etwa orthogonale Zuleiten von Kühlmedium zu dem Werkstück auch dann ermöglicht ist , wenn die Strömungsrichtung geändert wird und das Kühlmedium in Richtung Einlassbereich 22 strömt und über die Einlassöffnungen 27 abgeführt wird.

## Patentansprüche

1. Verfahren zum Fügen eines ersten Werkstücks (31) mit einem länglichen Werkstückabschnitt in eine Öffnung eines zweiten Werkstücks (32), wobei
- das zweite Werkstück (32) auf eine Fügetemperatur erwärmt wird und sich dabei die Öffnung (34) erweitert,
- der längliche Werkstückabschnitt passend in die erweiterte Öffnung (34) eingesetzt wird und
- zum Bilden eines Gesamtwerkstücks (30) zumindest das zweite Werkstück (32) abgekühlt und eine Presspassung zwischen dem eingesetzten länglichen Werkstückabschnitt und der Öffnung (34) gebildet wird,
**dadurch gekennzeichnet,**
**dass** das Gesamtwerkstück (30) nach dem Fügen mit einer Kühlluft beströmt wird, in welcher eine Kühlflüssigkeit eingesprüht ist.

2. Verfahren nach Anspruch 1,
**dadurch gekennzeichnet,**
**dass** ein Außenumfang des Gesamtwerkstücks (30) von der Kühlluft mit der eingesprühten Kühlflüssigkeit umströmt wird.

3. Verfahren nach Anspruch 1 oder 2,
**dadurch gekennzeichnet,**
**dass** zumindest in dem zweiten Werkstück (32) mindestens ein Durchgangskanal (33) vorgesehen ist, wobei die Kühlluft durch den mindestens einen Durchgangskanal (33) hindurchgeleitet wird.

4. Verfahren nach einem der Ansprüche 1 bis 3,
**dadurch gekennzeichnet,**
**dass** das Gesamtwerkstück (30) von einer oder mehreren Seiten von der Kühlluft beströmt wird.

5. Verfahren nach einem der Ansprüche 1 bis 4,
**dadurch gekennzeichnet,**
**dass** das Gesamtwerkstück (30) nach dem Fügen in eine Kühlvorrichtung (10) eingesetzt wird, welche mindestens eine Einlass- (27) und mindestens eine Auslassöffnung (27') für die Kühlluft aufweist.

6. Verfahren nach Anspruch 5,
**dadurch gekennzeichnet,**
**dass** die Kühlvorrichtung (10) ein Gehäuse (20) aufweist, welche einen Kühlraum umschließt, in welchen das Gesamtwerkstück (30) unter Verbleib eines umlaufenden Freiraums (21) eingesetzt wird, und
**dass** die Kühlluft durch den umlaufenden Freiraum (21) strömt und so der Außenumfang des Gesamtwerkstücks (30) umströmt wird.

7. Verfahren nach einem der Ansprüche 1 bis 6,
**dadurch gekennzeichnet,**
**dass** die Strömung mittels Druckluft und/oder einer Vakuumpumpe erzeugt wird.

8. Verfahren nach einem der Ansprüche 1 bis 7,
**dadurch gekennzeichnet,**
**dass** die Kühlluft unmittelbar vor Auftreffen auf das Gesamtwerkstück (30) mit der Kühlflüssigkeit beaufschlagt wird.

9. Kühlvorrichtung (10) zum Kühlen eines Gesamtwerkstücks (30), welches durch Fügen eines ersten Werkstücks (31) mit einem länglichen Werkstückabschnitt in eine Öffnung (34) eines zweiten Werkstücks (32) gebildet ist, wobei zumindest das zweite Werkstück (32) erwärmt ist,
mit einer Strömungseinrichtung, durch welche eine Strömung von Kühlluft erzeugbar ist, wobei das Gesamtwerkstück (30) von der Kühlluft umströmbar ist, insbesondere nach einem Verfahren nach einem der Ansprüche 1 bis 8,
**dadurch gekennzeichnet,**
**dass** eine Sprüheinrichtung (26) vorgesehen ist, mit welcher eine Kühlflüssigkeit in die Kühlluft sprühbar ist.

10. Kühlvorrichtung nach Anspruch 9,
**dadurch gekennzeichnet,**
**dass** die Kühlvorrichtung (10) ein Gehäuse (20) mit mindestens einer Einlassöffnung (27) und mindestens einer Auslassöffnung (27') für die Kühlluft aufweist.

11. Kühlvorrichtung nach Anspruch 10,
**dadurch gekennzeichnet,**
**dass** das Gehäuse (20) einen Kühlraum umschließt, in welchen das Gesamtwerkstück unter Verbleib eines umlaufenden Freiraums (21) einsetzbar ist, wobei die Kühlluft durch den umlaufenden Freiraum (21) zum Umströmen des Gesamtwerkstücks (30) strömbar ist.

12. Kühlvorrichtung nach Anspruch 9 oder 10,
**dadurch gekennzeichnet,**
**dass** mit einer Auslassöffnung (27') als Strömungseinrichtung eine Vakuumpumpe verbunden ist.
